# EUROPÄISCHE PATENTANMELDUNG

(11) **EP 3 624 061 A1**
(43) Veröffentlichungstag der Anmeldung: **18.03.2020**
(21) Anmeldenummer: 18194701.1
(22) Anmeldetag: 17.09.2018
(51) Int. Cl.: G06T 7/73

(54) **RELIABLE SCHÄTZUNG VON POSE UND SKELETT IN BEWEGUNGSAUFZEICHNUNGSSYSTEMEN MIT AKTIVEN MARKERN**

(71) Anmelder: PHILIPPS-UNIVERSITÄT MARBURG, 35037 Marburg (DE)
(72) Erfinder: Endres, Dominik, 35091 Cölbe-Schönstadt (DE); Velychko, Dmytro, 35032 Marburg (UA)
(74) Vertreter: Stumpf, Peter

(57) **Zusammenfassung**

Die vorliegende Erfindung betrifft ein Verfahren zur Schätzung von Skelett und Pose aus Bewegungsaufzeichnungsdaten ohne die Notwendigkeit manueller Korrekturen. Es weist eine große Robustheit gegenüber Verdeckungen und Meßfehlern auf. Die Skelett-Schätzung erfolgt dabei offline, die Posen-Schätzung erfolgt in Echtzeit online.

## Beschreibung

Die vorliegende Erfindung betrifft ein Verfahren zur Schätzung von Skelett und Pose aus Bewegungsaufzeichnungsdaten ohne die Notwendigkeit manueller Korrekturen. Es weist eine große Robustheit gegenüber Verdeckungen und Meßfehlern auf. Die Skelett-Schätzung erfolgt dabei offline, die Posen-Schätzung erfolgt in Echtzeit online.

### Stand der Technik

Es gibt bereits kommerzielle Produkte, um Bewegungsabläufe aus vorliegenden Bewegungsaufzeichnungsdaten abzuschätzen, zum Beispiel Autodesk MotionBuilder oder ReCap 2 von Fa. Phasespace. Diese weisen jedoch zahlreiche Nachteile und Unzulänglichkeiten auf, deren wichtigste nachfolgend kurz beschrieben werden.

Die verfügbaren Verfahren der Produkte/Werkzeuge/Softwarepakete stellen keine automatische Skelettschätzung bereit und erfordern stattdessen eine manuelle Skelettausrichtung. Wird diese nicht von einem erfahrenen Animateur durchgeführt, ergibt sich eine schlechte Performanz, die zeitraubende und fehleranfällige Korrekturen erfordert. Unter "Skelettschätzung" bzw. "Skelettausrichtung" wird hierbei und im nachfolgenden die dreidimensionale Positionsschätzung, bzw. Positionsausrichtung eines idealisierten Skeletts eines Lebewesens, bzw. einer einem Lebewesen in Gestaltung und Bewegungsfähigkeit mehr oder weniger naturgetreu nachempfundenen Maschine verstanden, wobei die Bestandteile des Skeletts selbst im allgemeinen keine physikalische Ausdehnung aufweisen, sondern mathematisch Linien oder Linienanordnungen (z.B. Dreiecken oder anderen geometrischen Figuren) entsprechen, die optional durch punktförmige Gelenke miteinander verbunden sind. Sowohl die reale physikalische Ausdehnung des Skeletts selbst (inklusive der Gelenke), als auch die darum herum befindlichen Weichteile, bzw. Weichteil-Analoga werden im Bedarfsfalle separat modelliert.

Für die vorstehend genannten kommerziellen Produkte gilt zum Beispiel das Folgende:
Recap 2 erfordert bestimmte Bewegungen von den aufzuzeichnenden Personen, die teilweise schwer aufzuführen sind, wie beispielweise Beinrotation im Hüftgelenk in möglichst großen Kreisen. Die Gelenkpositionsschätzung erfolgt dabei durch Schätzung eines Kugelmittelpunktes aus diesen Bewegungen. In der Mehrzahl der Fälle scheitert die Skelettschätzung aus den aufgenommenen Daten, was zeitraubende und frustrierende Neuaufnahmen erfordert. Falls die Gelenkpositionsschätzung doch gelingt, ist sie zumeist falsch und kann nachträglich nicht korrigiert werden. Zudem ist die Skeletttopologie nicht veränderbar.

Der Einsatz des Softwarepakets MotionBuilder (Teilpaket ActorWorkflow) ist sehr arbeitsaufwendig. Ein Volumen-Modell des Körpers, dessen Gelenkwinkel geschätzt werden soll, muß manuell in T-Pose in die aufgenommene Marker-Wolke hineingestellt werden, und die Marker müssen auf die Körperteile der Person abgebildet werden. Das Volumen-Modell ist hier eine grobe Näherung an den Körper, bestehend aus zylindrischen und kugelförmigen Segmenten, die durch Gelenke miteinander verbunden sind. Die Ergebnisse dieses Verfahrens sind oft nicht zufriedenstellend, z. B. aufgrund falscher Gelenkwinkel oder weil das Personen-Modell auseinanderfällt, wenn die Marker okkludiert werden. Unter Okklusion der Marker wird hierbei verstanden, daß sie infolge Verschattung oder ähnlichen Effekten zeitweilig nicht direkt oder nur sehr schlecht sichtbar sind. Die Gelenkpositionen müssen bei dem Verfahren durch den Anwender erraten werden.

Für die Anwendung des Softwarepakets MotionBuilder (Teilpaket Flexible Mocap) ist es zum einen notwendig, ein grobes volumetrisches Köpermodell zu definieren, auf dem die Marker manuell platziert werden müssen. Zum anderen ist Retargeting erforderlich, da zunächst erst auf ein Standard-Skelett abgebildet wird, von wo aus dann in einem zweiten Schritt auf das eigentlich gewünschte Skelett (das "Ziel-Skelett") abgebildet wird.

Aus den vorstehend beschriebenen Nachteilen der Verfahren gemäß dem Stand der Technik geht auch hervor, daß sie nur auf Menschen und deren Bewegungsabläufe anwendbar sind, da bewußte definierte Bewegungsabläufe während der Trainingsphase durchgeführt werden müssen, zu denen Tiere nicht in der Lage sind. Die Verfahren aus dem Stand der Technik sind daher nur eingeschränkt auf andere Lebewesen anwendbar.

In der EP 2 899 694 A2 wird ein Schätzungsverfahren zur Gewinnung eines parametrischen 3D-Körpermodells beschrieben, bei dem ebenfalls spärlich positionierte Marker eingesetzt werden. Dieses Verfahren verwendet kein Skelett, es kann aber mit Skelett-basierten Verfahren aus dem Stand der Technik kombiniert werden. Die in EP 2 899 694 A2 genannten Rechenzeiten im Sekundenbereich zeigen, daß dieses Verfahren nicht echtzeitfähig ist. Außerdem benötigt dieses Verfahren ein volumetrisches Körpermodell und ist damit aufwendiger als das erfindungsgemäße Verfahren, in dem kein volumetrisches Körpermodell benötigt wird. Dieses Verfahren umfasst insbesondere auch einen separaten Schritt zur Optimierung der Marker ("S103"), der bei dem erfindungsgemäßen Verfahren nicht erforderlich ist. Diese Optimierung der Marker umfasst die aufwendige und zeitintensive Erzeugung eines zusätzlichen Satzes von Markern und deren Einsatz zur Bereitstellung von 3D-Koordinaten von Marker-Signalen zur Erfassung von Form und Pose des Körpers und der Dynamik des Weichgewebes. Jeder Marker bedarf einer Anwender-spezifischen Definition eines erwarteten Abstandes des Marker-Mittelpunktes zur Hautoberfläche, bei dem es sich um einen A priori-Wert für diesen Abstand handelt. Weiterhin verlangt dieses Verfahren aus dem Stand der Technik die Einführung/Verwendung von Funktionen, d.h. mathematischen Zusammenhängen, die die räumliche Beziehung (Abstand, Richtung) der Marker zu vom Anwender ausgewählten Knoten des Netzes, das die Körperoberfläche darstellt. Die Begriffe "Knoten" und "Netz" werden hier im Sinne der entsprechenden mathematischen Begriffe aus dem Gebiet der Topologie verwendet, was dem Fachmann geläufig ist. Weiterhin wird bei dem in EP 2 899 694 A2 offenbarten Verfahren eine Datenbank benötigt, um möglichst viele Beispieldatensätze vorrätig zu haben, auf die zurückgegriffen werden muß, um - ausgehend von einer Variante eines Modells - eine weitere (ähnliche) Variante zu berechnen.

Dies ist bei dem erfindungsgemäßen Verfahren nicht erforderlich, das mit sehr geringem Vorwissen, nämlich lediglich den Skelettparametern des Modells, Schätzungen von Skelett und Pose von Modell-Varianten gestattet.

### Aufgabe

Aufgabe der vorliegenden Erfindung ist es, ein Verfahren zur Schätzung bzw. Berechnung, ggf. näherungsweisen Berechnung, von Skelett und Pose aus Bewegungsaufzeichnungsdaten bereitzustellen, das ohne die Notwendigkeit manueller Korrekturen auskommt, echtzeitfähig ist, und eine große Robustheit gegenüber Verdeckungen und Meßfehlern aufweist. Diese Robustheit ergibt sich aus einer näherungsweisen Bayes'schen maximum-a-posterior Schätzung bzw. Berechnung, ggf. näherungsweisen Berechnung, von Skelett und Pose.

### Lösung der Aufgabe

Diese Aufgabe wird erfindungsgemäß gelöst durch die kennzeichnenden Merkmale des unabhängigen Anspruchs 1. Die Unteransprüche stellen weitere vorteilhafte Ausgestaltungen dar.

Gegenstand der Erfindung ist ein Verfahren für die Schätzung bzw. Berechnung, ggf. näherungsweisen Berechnung, von Skelett **S** und Pose **P** aus spärlich positionierten (aktiven) Markern eines Bewegungsaufzeichnungssystems. Als "spärliche" Positionierung der Marker wird eine Positionierung der Marker angesehen, bei der mittelwertig circa drei Marker pro starrem Skelettelement verwendet werden. Die Begriffe "Schätzung", "Berechnung" und "näherungsweise Berechnung" werden hier und im folgenden synonym verwendet; dem Fachmann ist bekannt, daß es sich bei einer Schätzung um eine näherungsweise Berechnung und somit grundsätzlich um eine Berechnung handelt. Ein weiterer dafür synonym verwendbarer Begriff ist "Bestimmung", bzw. "näherungsweise Bestimmung".

Als aktive Marker werden hierbei Marker verstanden, die am Körper der Person befestigt sind. Die Marker, bzw. aktiven Marker, sind optisch erkennbar. Als "Person" im Sinne der Erfindung werden auch Tiere oder Maschinen verstanden, deren Bewegungen und Posen geschätzt werden sollen. "Starre Skelettelemente" sind sowohl starre Segmente des Skeletts als auch Gelenke an sich, die die starren Segmente beweglich miteinander verbinden.

Geeignete Bewegungsaufzeichnungssysteme zur Durchführung des erfindungsgemäßen Verfahrens sind dem Fachmann aus dem Stand der Technik bekannt und können verwendet werden, ohne den Umfang der Erfindung oder ihrer Äquivalente zu verlassen.

Das erfindungsgemäße Verfahren benötigt kein Volumen-Modell, sondern lediglich Skelettparameter (beispielsweise die Längen der Knochen und die Gelenkwinkel zwischen den Knochen), um Skelett und Pose aus spärlich positionierten Markern zu schätzen.

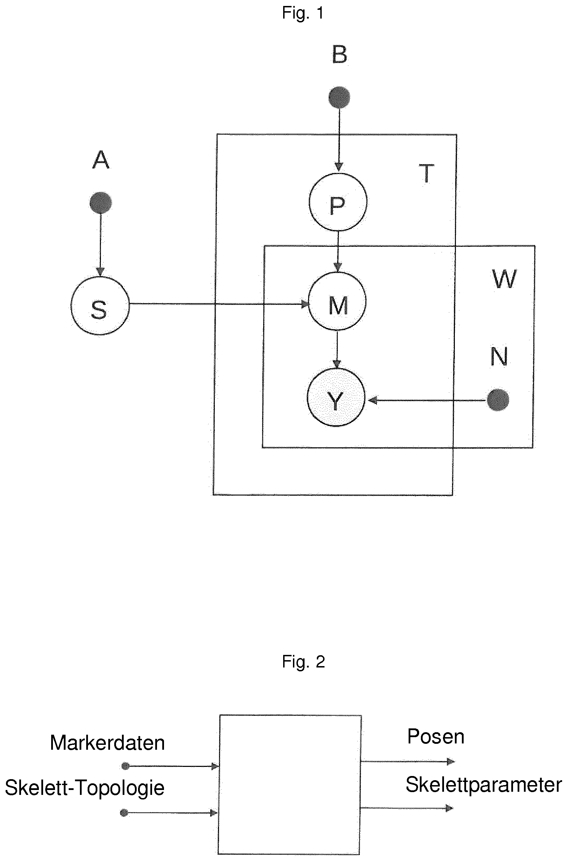

Die Schätzung erfolgt mittels eines probabilistischen, generativen graphischen Modells der Daten, dessen latente Variablen und Parameter geschätzt werden (vgl. Fig. 1). Infolgedessen sind keine manuellen Einstellungen von Parametern erforderlich. Als "latente" Variablen und Parameter werden Variablen und Parameter bezeichnet, die nicht direkt beobachtbar sind, hier (beispielsweise): die Geometrie der Knochen des Skelettmodels und die Gelenkwinkel.

Die vom Bewegungsaufzeichnungssystem (in Fig. 1 nicht gezeigt) an **T** Zeitpunkten gemessenen Markerdaten **Y** mit der Dimensionalität **D** werden als Tensor **TxWxD** dargestellt. In diesem Modell entsteht jede Messung aus den tatsächlichen Markerdaten **M,** die von gaußverteiltem Rauschen **N** gestört werden. Die Markerdaten bzw. Markerpositionen **M** sind deterministische Funktionen der tatsächlichen Pose **P** des individuellen Skeletts **S** (inklusive der Platzierungen der Marker an demselben) zu jedem Zeitschritt, wobei sich die Funktionen aus der Geometrie von Skelett **S** ergeben. Dem Fachmann sind die vorstehend erwähnten deterministischen Funktionen sowie deren geeignete Auswahl und Anwendung aus dem Bereich der Kinematik bekannt. Auch die Art und Weise, wie sich die Funktionen aus der Geometrie von Skelett **S** ergeben, ist dem Fachmann aus dem Stand der Technik bekannt. Skelett **S** beschreibt die Topologie des Skeletts inklusive der ungefähren Platzierung der Marker am Körper der Versuchsperson. Mit dem Ausdruck der "ungefähren Platzierung" ist gemeint, daß es lediglich erforderlich ist zu wissen, an welchem Skelettteil (Segment des Skeletts) der Marker befestigt ist; die genaue Position des Markers auf dem jeweiligen Skelettteil (Segment) ist nicht erforderlich. In der a-priori Verteilung **A** sind Erwartungen bezüglich eines typischen Skeletts **S** encodiert (Ausdehung der Segmente), in der Verteilung **B** wird die Posenerwartung beschrieben, die von mindestens einer der Posen der vorherigen Zeitschritte abhängen kann.

Das Skelett **S** wird durch einen kinematischen Baum beschrieben. Ein menschliches Skelett hat beispielsweise die Wurzel an der Hüfte und verzweigt sich in Wirbelsäule und Beine. Die Wirbelsäule verzweigt sich weiter in Kopf, Arme und Hände. Die Elemente dieses beispielhaften kinematischen Baumes sind: parametrisierte Knochen und Gelenke (Kugel-, Scharnier- und Drehgelenke), sowie Markerverbindungselemente, die Marker mit Knochen, d.h. mit den starren Segmenten, verbinden. Ein Markerverbindungselement ist ein Vektor. Dieser beschreibt die Position eines Markers relativ zu dem Knochen, an dem dieser Marker befestigt ist. Analoge Markerverbindungselemente bestehen ggf. auch zwischen Markern, die Gelenke markieren sowie diesen Gelenken.

Das Schätzen der Pose umfasst eine zweischrittige (zweistufige) Prozedur. Im ersten Schritt werden die Skelettparameter, wie beispielsweise die Längen der einzelnen Knochen, Gelenkwinkel zwischen den einzelnen Knochen usw., geschätzt. Dazu muß die aufzunehmende Person für wenige Minuten möglichst unkorrelierte Bewegungen ausführen. Im zweiten Schritt wird dann das geschätzte Skelett **S** verwendet, um die gewünschten Posen **P** zu schätzen.

### Schritt 1:

In Schritt 1 (vgl. Fig. 2) werden Marker-Aufzeichnungen möglichst unkorrelierter Bewegungen verwendet, um zusammen mit einer Skeletttopologie die Skelettparameter und die Markerplatzierungen am Skelett **S** zu schätzen. Dies geschieht mittels einer maximum-a-posteriori Schätzung aller Parameter (insbesondere Skelettparameter) und latenten Variablen (insbesondere **P, M**) des Modells in Fig. 1. Dem Fachmann sind geeignete maximum-a-posteriori Schätzverfahren aus dem Stand der Technik bekannt, die verwendet werden können, ohne den Umfang der Erfindung oder ihrer Äquivalente zu verlassen.

Durch ein iteratives Vorgehen wird eine hohe Performanz und Robustheit erreicht: Die Skelettparameter werden je nach ihrer Entfernung zur Wurzel (Pelvis) in mehrere Untermengen unterteilt, beispielsweise in Untermengen (Gruppen) von Parametern der direkten (nächsten) Nachbarn, übernächsten Nachbarn, Nachbarn der dritten, vierten, n-ten Generation, usw. Zunächst wird sodann nur die Position der Pelvis geschätzt. Als nächstes werden die Parameter der Kindknoten der Pelvis zusammen mit dieser neu geschätzt. Diese Prozedur (Schätzung) wird iteriert, bis schließlich alle Parameter geschätzt sind. Im Zuge der Parameterschätzung werden ebenfalls die Posen der im Schritt 1 verwendeten Daten geschätzt. Dies ist notwendig, um den Schätzfehler der Markerposition bestimmmen zu können, welcher sich aus dem Unterschied zwischen den aus Skelett und Pose geschätzten Markerpositionen, und den gemessenen Markerpositionen ergibt.

### Schritt 2:

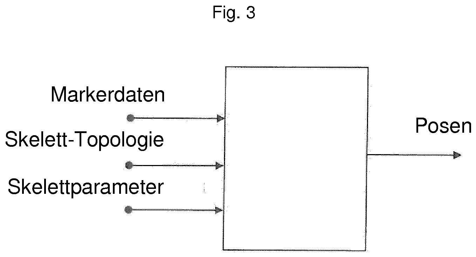

In Schritt 2 (vgl. Fig. 3) wird die Posenschätzung aus einem Strom von Markerdaten in Echtzeit durchgeführt. Hierfür kommt ebenfalls ein maximum-a-posteriori Schätzverfahren zur Anwendung. Im Gegensatz zu Schritt 1 wird jedoch nur die Pose geschätzt, nicht die Skelettparameter. Schritt 2 stellt somit die zeitkritische Anwendungsphase des Verfahrens dar. Als Eingaben hierfür werden die Skeletttopologie, die in Schritt 1 geschätzten Skelettparameter und der Strom der Markerdaten verwendet. Ausgabe von Schritt 2 ist ein Strom von Posen (Gelenkwinkel). Die Posenschätzung erfolgt ausgehend von der Pose aus dem direkt vorausgehenden Zeitschritt, was die Schätzung erheblich beschleunigt und die Robustheit erhöht, da so zeitlich unkorrelierte Messfehler mittelwertig reduziert werden.

Die allgemeine Robustheit und Echtzeit-Einsatzfähigkeit wird somit durch eine Zweischritt-Prozedur (ein zweistufiges Verfahren) erreicht, wobei zuerst das Skelett und anschließend die Posensequenzen geschätzt werden.

Die Robustheit gegenüber Verdeckungen wird durch die Verwendung eines dynamischen prädiktiven Modells erreicht, bei dem die Positionen verdeckter Marker aus dem Skelettmodell und der aus den sichtbaren Markern geschätzter Pose interpoliert werden können.

Das erfindungsgemäße Verfahren weist die folgenden beweisbaren Optimalitätseigenschaften auf:
1. für ein gegebenes Skelett (Topologie und Parameter) werden mit sehr hoher Wahrscheinlichkeit die optimalen Posen gefunden, die gemessene Markerdaten mit minimalem Schätzfehler annähern,
2. für eine gegebene Skelettopologie werden mit sehr hoher Wahrscheinlichkeit die optimalen Skelettparameter gefunden, die die Minimierung der Schätzfehler von Markerdaten zulassen,
3. für ein gegebenes Skelett (Topologie und Parameter) werden mit sehr hoher Wahrscheinlichkeit die optimalen Interpolationen von Verdeckungen fehlender Markerdaten gefunden, solange weniger als 20% der Marker verdeckt oder unsichtbar sind.

Der Gegenstand der Erfindung wird daher wie nachfolgend beschrieben zusammengefasst.

Die Erfindung umfasst ein Verfahren zur Schätzung von Skelett **S** und Pose **P** eines beweglichen Objekts unter Verwendung von zu bestimmten Zeitschritten aufgezeichneten Markerpositionen **Y** von an der äußeren Hülle des Objekts spärlich (Definition von "spärlich" siehe oben) positionierten Markern, gekennzeichnet durch folgende Schritte:
A) Befestigen der Marker an dem beweglichen Objekt an ausgewählten Positionen mittels Befestigungsmitteln, ausgewählt aus der Liste umfassend Klettverschlüsse, Klebstoffe, magnetische Befestigungssysteme,
B) Erstellung eines probabilistischen generativen graphischen Modells für die Schätzung von Skelett und Pose des beweglichen Objekts, umfassend ein Skelett **S,** wobei **S** die Skelett-Topologie und die Marker-Topologie der relativ zu diesem an der äußeren Hülle des Objekts spärlich (Definition von "spärlich" siehe oben) positionierten Marker beschreibt, eine a-priori-Verteilung **A,** in der die Erwartungen bzgl. der Präzision der Markerpositionen **Y** encodiert sind, und eine Verteilung **B,** die von der Pose der vorherigen Zeitschritte abhängen kann,
C) Hinterlegung des probabilistischen generativen graphischen Modells für die Schätzung von Skelett und Pose des beweglichen Objekts aus Schritt B in der Recheneinheit eines Bewegungsaufzeichnungs- oder Bewegungsverarbeitungssystems, wobei das Modell ein Skelett **S** durch einen kinematischen Baum beschreibt, welcher
   a) parametrisierte Knochen und Gelenke sowie Markerverbindungselemente, welche die Topologie der Marker relativ zu den Knochen beschreiben, umfasst, und bei dem
   b) jeder Knochen von **S** genau einen Vorgängerknochen hat, und es genau einen Knochen ohne Vorgängerknochen gibt, der die Wurzel bildet,
D) Messung von Markerpositionen **Y** mit der Dimensionalität **D,** wobei die Markerpositionen **Y** drei Ortskoordinaten pro Marker und deren Präzision umfassen, zu aufeinanderfolgenden diskreten Zeitpunkten **T** mithilfe des Bewegungsaufzeichnungs- oder Bewegungsverarbeitungssystems, wobei die Bewegungen des Objekts die möglichen Relativbewegungen der Markerpositionen **Y** zueinander im wesentlichen abdecken,
E) Speicherung der Markerpositionen **Y** in Form eines Tensors **TxWxD** in einer Speichereinheit des Bewegungsaufzeichnungs- oder Bewegungsverarbeitungssystems, wobei **W** die Markerpositionen **Y** mit den ihnen zugeordneten Präzisionen beschreibt,
F) mindestens einmaliges Schätzen der einer Pose nachfolgenden Pose, indem nacheinander folgende Teilschritte ausgeführt werden:
   i) Verwendung der gespeicherten Markerpositionen **Y** und des Skeletts **S** mit der Skelett-Topologie und der Marker-Topologie zur Schätzung von Skelett-Parametern, welche die parametrisierten Knochen und Gelenke beschreiben, und zur Schätzung der Markerpositionen **Y** relativ zu den parametrisierten Knochen und Gelenken,
   ii) Schätzen der der Pose nachfolgenden Pose, beschrieben durch Gelenkwinkel, in Echtzeit, wobei als Eingabe die Skelett-Topologie, die in Teilschritt i) geschätzten Skelett-Parameter sowie ein von einem Bewegungsaufzeichnungssystem erzeugter Strom von neuen Markerpositionen **Y** verwendet werden und als Ausgabe ein Strom von Posen generiert wird.

"Skelett" (**S**) ist dabei definiert als eine Menge von Knochen (Segmenten), parametrisiert durch deren Länge sowie deren Nachbarschaftsbeziehungen, beschrieben durch Gelenke. Bei der in Schritt B) offenbarten Recheneinheit eines Bewegungsaufzeichnungs- oder Bewegungsverarbeitungssystems handelt es sich beispielsweise um einen handelsüblichen Personal Computer oder Laptop, bzw. dessen CPU, ggf. einschließlich zugehöriger Peripherie. Die in Schritt C) beschriebenen, die möglichen Relativbewegungen der Markerpositionen **Y** zueinander im wesentlichen abdeckenden Bewegungen des Objekts, sollten möglichst viele, bevorzugt über 50%, weiter bevorzugt über 70% und ganz besonders bevorzugt über 90% der dem Objekt möglichen Posen umfassen.

Die Erfindung umfasst weiterhin ein Verfahren wie vorstehend beschrieben, dadurch gekennzeichnet, dass das bewegliche Objekt ein Mensch, ein Wirbeltier, ein anthropomorpher Roboter oder ein anderes artikuliertes Objekt ist (beispielsweise ein tierähnlicher Roboter), wobei das Skelett des artikulierten Objektes eine Baumstruktur hat.

Als "artikuliertes Objekt" wird ein Objekt verstanden, bestehend aus starren Segmenten, die durch Gelenke miteinander verbunden sind. Die Begriffe "artikuliertes Objekt", "bewegliches Objekt" oder einfach "Objekt" werden synonym verwendet.

Die Erfindung umfasst weiterhin ein Verfahren wie vorstehend beschrieben, dadurch gekennzeichnet, dass die Skelett-Parameter abhängig von ihrer Entfernung zur Wurzel in mehrere Untermengen unterteilt werden und in Teilschritt i) zuerst nur die Position der Wurzel geschätzt wird und in folgenden iterativen Schätzprozeduren die Schätzung der durch zunehmende Entfernung von der Wurzel charakterisierten Untergruppen nacheinander hinzugefügt wird, bis alle Skelett-Parameter geschätzt sind.

Die Erfindung umfasst weiterhin ein Verfahren wie vorstehend beschrieben, dadurch gekennzeichnet, dass ergänzend zu den Skelett-Parametern auch die Posen geschätzt werden.

Die Erfindung umfasst weiterhin ein Verfahren gemäß einer der vorstehend beschriebenen Varianten, dadurch gekennzeichnet, dass die Posenschätzung in Teilschritt ii) von der Pose im vorherigen Zeitschritt ausgeht.

Die Erfindung umfasst weiterhin eine Vorrichtung zur Durchführung des Verfahrens gemäß einer der vorstehend beschriebenen Varianten, die sich dadurch auszeichnet, daß sie folgende Teile umfasst:
- Marker;
- Befestigungsmittel zur Befestigung von Markern, wobei diese Befestigungsmittel unabhängig voneinander und jeweils mindestens einmalig ausgewählt sind aus der Liste umfassend Schnüre, Bänder, Knopf-Verbindungsmittel, Klettverbindungsmittel, Klebemittel, magnetische Befestigungsmittel;
- mindestens ein Bewegungsaufzeichnungs- und/oder mindestens ein Bewegungsverarbeitungssystem, wobei dieses mindestens eine Bewegungsaufzeichnungs- und/oder Bewegungsverarbeitungssystem mindestens eine Eingabeeinheit, eine Speichereinheit, eine Recheneinheit sowie eine Ausgabeeinheit umfasst.

### Ausführungsbeispiele

### Beispiel 1:

### Vorbereitung (Gewinnung der Marker-Aufzeichnungen, "Marker-Datensatz"):

Ein artikuliertes Objekt wird veranlasst (beispielsweise eine Person wird gebeten), für eine Dauer von ca. 2 Minuten Ganzkörperbewegungen zu vollführen, während derer möglichst viele mögliche Posen durchlaufen werden sollten. Als "Ganzkörperbewegung" im Sinne der vorliegenden Erfindung werden Bewegungen verstanden, bei denen mindestens zwei Extremitäten bzw. Gliedmaße sowie der Korpus gleichzeitig bewegt werden. In dieser Phase werden nur Bewegungsaufzeichnungen der optischen Marker vorgenommen, d.h. es wird eine Bewegungserfassung vorgenommen. Im Falle der Anwendung des Verfahrens auf Tiere können aus entsprechenden Aufzeichnungen geeignete Bewegungsphasen ausgewählt werden, bzw. ein Betreuer/Dompteur kann gewünschte Bewegungen, etwa durch geeignete spielerische Interaktionen mit dem Tier, anregen.

### Schritt 1 von 2:

Schätzung des Skeletts der Person, aus den in Schritt 1 aufgenommenen Bewegungsdaten. Dieser Schritt benötigt 3 bis 6 Minuten.

### Schritt 2 von 2:

Durchführung der Echtzeit-Online-Schätzung der Posen. Die Compilierung des Modellcodes benötigt dabei bei Implementierung des Verfahrens mittels Interpreter-Sprachen wie beispielsweise Python etwa eine Minute. Dem Fachmann ist bekannt, daß es für zeitkritische Online-Anwendungen vorteilhaft ist, den Quellcode des Modells in einer Compilersprache wie etwa Fortran, Pascal oder C, bzw. deren Weiterentwicklungen, zu verfassen und anschließend zu compilieren und zu linken, um eine entsprechende direkt ausführbare Binärdatei zu erhalten.

### Abbildungslegenden und Bezugszeichenliste

- Fig. 1:: Schematisch-beispielhafte Darstellung des probabilistischen, graphischen Modells für die Skelett- und Posenschätzung.
- Fig. 2:: Schematisch-beispielhafte Darstellung von Schritt 1: Schätzen von Skelettparametern aus Topologie (Skelett-Topologie) und Markerdaten.
- Fig. 3: Schematisch-beispielhafte Darstellung von Schritt 2: Schätzen der Pose in Echtzeit.

## Patentansprüche

1. Verfahren zur Bestimmung von Skelett **S** und Pose **P** eines beweglichen Objekts unter Verwendung von zu bestimmten Zeitschritten aufgezeichneten Markerpositionen **Y** von an der äußeren Hülle des beweglichen Objekts spärlich positionierten Markern, **gekennzeichnet durch** folgende Schritte:
A) Befestigen der Marker an dem beweglichen Objekt an ausgewählten Positionen der Segmente des beweglichen Objekts,
B) Erstellung eines probabilistischen generativen graphischen Modells für die Bestimmung von Skelett und Pose des beweglichen Objekts, umfassend ein Skelett **S,** wobei Skelett **S** die Skelett-Topologie und die Marker-Topologie der relativ zu diesem an der äußeren Hülle des Objekts spärlich positionierten Marker beschreibt, eine a-priori-Verteilung **A,** in der die Erwartungen bzgl. der Präzision der Markerpositionen **Y** encodiert sind, und eine Verteilung **B,** die von der Pose der vorherigen Zeitschritte abhängt,
C) Hinterlegung des probabilistischen generativen graphischen Modells für die Bestimmung von Skelett **S** und Pose **P** des beweglichen Objekts aus Schritt B in der Recheneinheit eines Bewegungsaufzeichnungs- oder Bewegungsverarbeitungssystems, wobei das Modell ein Skelett **S durch** einen kinematischen Baum beschreibt, welcher
a) parametrisierte Knochen und Gelenke sowie Markerverbindungselemente, welche die Topologie der Marker relativ zu den Knochen beschreiben, umfasst, und bei dem
b) jeder Knochen von Skelett **S** genau einen Vorgängerknochen hat, und es genau einen Knochen ohne Vorgängerknochen gibt, der die Wurzel bildet,
D) Messung von Markerpositionen **Y** mit der Dimensionalität **D,** wobei die Markerpositionen **Y** drei Ortskoordinaten pro Marker und deren Präzision umfassen, zu aufeinanderfolgenden diskreten Zeitpunkten **T** mithilfe des Bewegungsaufzeichnungs- oder Bewegungsverarbeitungssystems, wobei die Bewegungen des Objekts die möglichen Relativbewegungen der Markerpositionen **Y** zueinander im wesentlichen abdecken,
E) Speicherung der Markerpositionen **Y** in Form eines Tensors **TxWxD** in einer Speichereinheit des Bewegungsaufzeichnungs- oder Bewegungsverarbeitungssystems, wobei **W** die Markerpositionen **Y** mit den ihnen zugeordneten Präzisionen beschreibt,
F) mindestens einmaliges Bestimmen der einer Pose nachfolgenden Pose, indem nacheinander folgende Teilschritte ausgeführt werden:
i) Verwendung der gespeicherten Markerpositionen **Y** und des Skeletts **S** mit der Skelett-Topologie und der Marker-Topologie zur Berechnung von Skelett-Parametern, welche die parametrisierten Knochen und Gelenke beschreiben, und zur Berechnung der Markerpositionen **Y** relativ zu den parametrisierten Knochen und Gelenken,
ii) Bestimmung der der Pose nachfolgenden Pose, beschrieben durch Gelenkwinkel, in Echtzeit, wobei als Eingabe die Skelett-Topologie, die in Teilschritt i) geschätzten Skelett-Parameter sowie ein von einem Bewegungsaufzeichnungssystem erzeugter Strom von neuen Markerpositionen **Y** verwendet werden und als Ausgabe ein Strom von Posen **P** generiert wird.

2. Verfahren nach Anspruch 1, **dadurch gekennzeichnet, dass** das bewegliche Objekt ein Mensch, ein Wirbeltier, ein anthropomorpher Roboter oder ein anderes artikuliertes Objekt ist, wobei das Skelett des artikulierten Objektes eine Baumstruktur hat.

3. Verfahren nach Anspruch 2, **dadurch gekennzeichnet, dass** die Skelett-Parameter abhängig von ihrer Entfernung zur Wurzel in mehrere Untermengen unterteilt werden und in Teilschritt i) zuerst nur die Position der Wurzel bestimmt wird und in folgenden iterativen Bestimmungsprozeduren die Bestimmung der durch zunehmende Entfernung von der Wurzel charakterisierten Untergruppen nacheinander hinzugefügt wird, bis alle Skelett-Parameter bestimmt sind.

4. Verfahren nach Anspruch 3, **dadurch gekennzeichnet, dass** ergänzend zu den Skelett-Parametern auch die Posen **P** bestimmt werden.

5. Verfahren nach einem der Ansprüche 1 bis 4, **dadurch gekennzeichnet, dass** die Posenbestimmung in Teilschritt ii) von der Pose **P** im vorherigen Zeitschritt ausgeht.

6. Vorrichtung zur Durchführung des Verfahrens gemäß einem der vorangegangenen Ansprüche 1 bis 5, **dadurch gekennzeichnet, daß** die Vorrichtung folgende Teile umfasst,
- Marker;
- Befestigungsmittel zur Befestigung von Markern, wobei diese Befestigungsmittel unabhängig voneinander und jeweils mindestens einmalig ausgewählt sind aus der Liste umfassend Schnüre, Bänder, Knopf-Verbindungsmittel, Klettverbindungsmittel, Klebemittel, magnetische Befestigungsmittel;
- mindestens ein Bewegungsaufzeichnungs- und/oder mindestens ein Bewegungsverarbeitungssystem, wobei dieses mindestens eine Bewegungsaufzeichnungs- und/oder Bewegungsverarbeitungssystem mindestens eine Eingabeeinheit, eine Speichereinheit, eine Recheneinheit sowie eine Ausgabeeinheit umfasst.
